# EUROPEAN PATENT SPECIFICATION

(11) **EP 4 171 109 B1**
(45) Date of publication and mention of the grant of the patent: **15.07.2026**
(21) Application number: 22201881.4
(22) Date of filing: 17.10.2022
(51) Int. Cl.: H04W 24/10, H04W 24/08, H04W 28/02, H04W 28/24, H04W 8/24, H04L 41/5067

(54) **QUALITY OF EXPERIENCE MEASUREMENT**
MESSUNG DER ERFAHRUNGSQUALITÄT
MESURE DE QUALITÉ D'EXPÉRIENCE

(30) Priority: 22.10.2021 WO PCT/CN2021/125504
(43) Date of publication of application: 26.04.2023
(73) Proprietor: Nokia Technologies Oy, 02610 Espoo (FI)
(72) Inventor: TOMALA, Malgorzata, Wroclaw (PL); HE, Jing, Beijing (CN); PING, Jing, Chengdu (CN)
(74) Representative: Cohausz & Florack

(56) References cited:
- QUALCOMM INCORPORATED: "QoE configuration and reporting", vol. RAN WG2, no. e-Meeting; 20210809 - 20210827, 6 August 2021 (2021-08-06), XP052034428, Retrieved from the Internet <URL:https://ftp.3gpp.org/tsg_ran/WG2_RL2/TSGR2_115-e/Docs/R2-2107816.zip R2-2107816 - Left issues for QoE confiugration and reporting.docx> [retrieved on 20210806]
- ERICSSON: "Feature summary for 8.14.2.1", vol. RAN WG1, no. Electronic; 20210809 - 20210827, 17 August 2021 (2021-08-17), XP052043081, Retrieved from the Internet <URL:https://ftp.3gpp.org/tsg_ran/WG2_RL2/TSGR2_115-e/Inbox/R2-2109038.zip R2-2109038 Feature summary for AI 8.14.2.1.docx> [retrieved on 20210817]
- OPPO: "Discussion on QoE measurement collection configuration in NR", vol. RAN WG2, no. electronic; 20211101, 21 October 2021 (2021-10-21), XP052066551, Retrieved from the Internet <URL:https://ftp.3gpp.org/tsg_ran/WG2_RL2/TSGR2_116-e/Docs/R2-2110099.zip R2-2110099 Discussion on QoE measurement collection configuration in NR.docx> [retrieved on 20211021]
- "3rd Generation Partnership Project; Technical Specification Group Services and System Aspects; Telecommunication management; Quality of Experience (QoE) measurement collection; Control and configuration (Release 16)", vol. SA WG5, no. V16.1.0, 23 September 2021 (2021-09-23), pages 1 - 15, XP052056596, Retrieved from the Internet <URL:https://ftp.3gpp.org/Specs/archive/28_series/28.405/28405-g10.zip 28405-g10.doc> [retrieved on 20210923]

## Description

### FIELD

Embodiments of the present disclosure generally relate to the field of telecommunication and in particular, to methods, devices, apparatuses and computer readable storage medium for Quality of Experience (QoE) measurements.

### BACKGROUND

With development of communication technologies, several solutions have been proposed to provide efficient and reliable solutions for communication. It is vital to measure communication quality in order to ensure communication performances. For example, Quality of Service (QoS) has been proposed, which refers to any technology that manages data traffic to reduce packet loss, latency and jitter on a network. The fifth generation (5G) cellular networks may contain cloud computing and QoS parameters influence the cloud network performance. The user perceived Quality of Experience (QoE) using multimedia services and application significantly relies on the QoS parameters. It is worth studying on performing the QoE measurement in a more efficient manner.

QUALCOMM INCORPORATED: "QoE configuration and reporting", vol. RAN WG2, no. e-Meeting; 20210809 - 20210827, 6 August 2021 (2021-08-06), 3GPP DRAFT; R2-2107816, discloses to specify the support for QoE measurement collection in NR standalone mode. To identify a QoE configuration, a RRC level ID should be unique. For this, it is proposed to introduce a RRC defined ID that is allocated by the gNB when the gNB receives a QoE configuration. D1 further proposes to adopt RRC defined ID included in RRC configuration and MeasReportAppLayer message to identify one QoE configuration and related report.

ERICSSON: "Feature summary for 8.14.2.1", vol. RAN WG1, no. Electronic; 20210809 - 20210827, 17 August 2021 (2021-08-17), 3GPP DRAFT; R2-2109038, relates to QoE configuration and reporting.

OPPO: "Discussion on QoE measurement collection configuration in NR", vol. RAN WG2, no. electronic; 20211101, 21 October 2021 (2021-10-21), 3GPP DRAFT; R2-2110099, discloses that multiple QoE configuration per service type could be supported by UE simultaneously.

3rd Generation Partnership Project; Technical Specification Group Services and System Aspects; Telecommunication management; Quality of Experience (QoE) measurement collection; Control and configuration (Release 16)", vol. SAWG5, no. V16.1.0, 23 September 2021 (2021-09-23), discloses technical specification of QoE measurement collection.

### SUMMARY

In general, example embodiments of the present disclosure provide a solution for QoE measurements. The invention is defined in the appended claims.

### BRIEF DESCRIPTION OF THE DRAWINGS

Some example embodiments will now be described with reference to the accompanying drawings, where:
Fig. 1 illustrates an example communication environment in which example embodiments of the present disclosure can be implemented;
Fig. 2 illustrates a signaling flow for QoE measurements according to some example embodiments of the present disclosure;
Fig. 3 illustrates a flowchart of a method for QoE measurements implemented at a first apparatus according to some example embodiments of the present disclosure;
Fig. 4 illustrates a flowchart of a method for QoE measurements implemented at a second apparatus according to some other example embodiments of the present disclosure;
Fig. 5 illustrates a simplified block diagram of an apparatus that is suitable for implementing example embodiments of the present disclosure; and
Fig. 6 illustrates a block diagram of an example computer readable medium in accordance with some example embodiments of the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), New Radio-Advanced (NR-A), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, an Integrated and Access Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. The term "terminal device" refers to any end device that may be capable of wireless communication. In the following description, the terms "terminal device", "terminal", "user equipment" and "UE" may be used interchangeably.

As mentioned above, it is important to measure communication quality. Quality of experience (QoE) is a measure of the delight or annoyance of a customer's experiences with a service (e.g., web browsing, phone call, TV broadcast). QoE considers a user's expectation, while QoS is more rational based on technical measurements. QoE focuses on the entire service experience; it is a holistic concept, similar to the field of user experience, but with its roots in telecommunication.

As a measure of the end-to-end performance at the service level from the user's perspective, QoE is an important metric for the design of systems and engineering processes. This is particularly relevant for video services because - due to their high traffic demands -, bad network performance may highly affect the user's experience. So, when designing systems, the expected output, i.e. the expected QoE, is often taken into account - also as a system output metric and optimization goal. QoE metrics are often measured at the end devices and can conceptually be seen as the remaining quality after the distortion introduced during the preparation of the content and the delivery through the network, until it reaches the decoder at the end device. There are several elements in the media preparation and delivery chain, and some of them may introduce distortion. This causes degradation of the content, and several elements in this chain can be considered as "QoE-relevant" for the offered services. The causes of degradation are applicable for any multimedia service, that is, not exclusive to video or speech. Typical degradations occur at the encoding system (compression degradation), transport network, access network (e.g., packet loss or packet delay), home network (e.g. WiFi performance) and end device (e.g. decoding performance).

Moreover, QoE Measurement Collection (QMC) mechanism has been standardized that enables collection of application layer measurements from the UE. Additionally, configuration, activation, and deactivation procedures for both signaling-based and management-based QoE measurement collection and reporting have been proposed.

For NR/LTE QoE measurement collection (QMC) mechanism, there is an air interface support required (coordination between the UE and the gNB), as well as internal coordination in the UE (between UE's Access Stratum and Application layers). For the air interface, a RRC downlink message is designed to configure the UE (e.g., RRC Reconfiguration message), and RRC uplink message, for example, MeasReportAppLayer message, is designed to send QoE measurement report data container from UE AS to RAN node. Common understanding is, radio access network (RAN) node should not be asked to decode the container included in MeasReportAppLayer message, RAN node just forwards the QoE configuration as a transparent container. For the NR QoE support in RAN, it has agreed to add RRC short identity (ID) in MeasReportAppLayer message to help gNB identify QoE report from the UE, as multiple QoE measurements for one service type is allowed to configure to one certain UE. However, the association of the UE configurations in RRC layer (between the UE and the gNB) does not allow to identify the configuration in the UE Application layer, neither what configuration was originally associated with the reports.

Currently, QoE reference ID may be used to identify the QoE measurement collection job in the traffic nodes and in the measurement collection center. So it's supposed to link QMC request/configuration from a management system (for example, a network manager (NM)) to gNB, UE Access Stratum (AS) and UE application, and link QMC report from UE application to UE AS, gNB and multi broadcast multi service (MBMS) Coordination Entity (MCE). Replacing QMC Reference ID with RRC ID in AS signaling may break QMC request and report chains, as well as link between the request and report.

Furthermore, the reports may be provided by Application layer to Access Stratum layer, but due to transparency and avoiding QoE Reference ID over the air, this is unknown what individual configuration triggered the report. Thus, several ongoing sessions in Application layer have no tracked identities and undefined references. Especially, during cell reselection/handover or in other possible one UE to multiple gNB scenarios, potential duplicated RRC ID may be configured on a single UE by different gNB of same or different PLMNs, that would cause issue for UE to forward QoE report back to the gNB which has sent the QMC configuration to the UE.

A new solution on QoE measurements is needed. According to embodiments of the present disclosure, a terminal device is able to coordinate between an Access Stratum layer and an Application layer to associate the QoE configuration with the corresponding reports, and in this way, it enables unique identification of a single QoE configuration, as well as the corresponding QoE report at the terminal device.

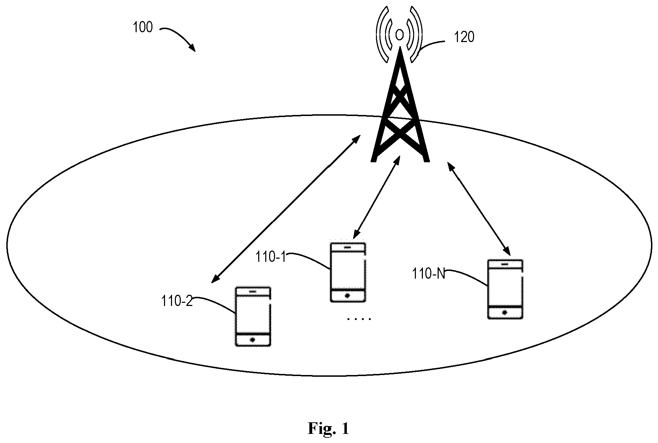

Fig. 1 illustrates a schematic diagram of a communication environment 100 in which embodiments of the present disclosure can be implemented. The communication environment 100, which is a part of a communication network, further comprises a device 110-1, a device 110-2, . . . . , a device 110-N, which can be collectively referred to as "first device(s) 110." The communication environment 100 comprises a second device 120. The number N can be any suitable integer numbers.

The communication environment 100 may comprise any suitable number of devices and cells. In the communication environment 100, the first device 110 and the second device 120 can communicate data and control information to each other. In the case that the first device 110 is the terminal device and the second device 120 is the network device, a link from the second device 120 to the first device 110 is referred to as a downlink (DL), while a link from the first device 110 to the second device 120 is referred to as an uplink (UL). The first device 110 can be configured with more than one cell.

It is to be understood that the number of first devices and cells and their connections shown in Fig. 1 is given for the purpose of illustration without suggesting any limitations. The communication environment 100 may include any suitable number of devices and networks adapted for implementing embodiments of the present disclosure.

Communications in the communication environment 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

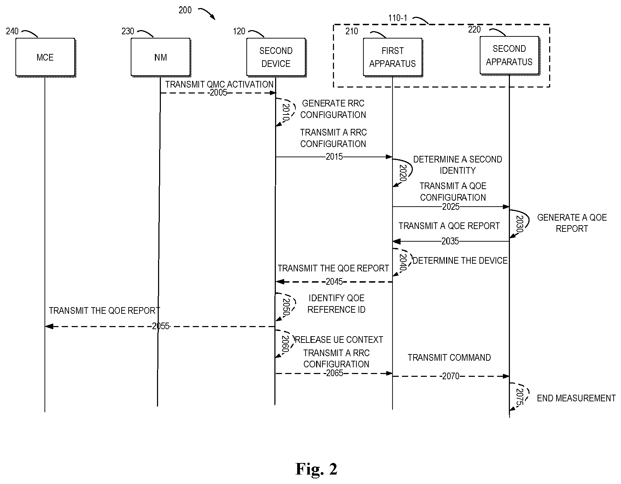

Example embodiments of the present disclosure will be described in detail below with reference to the accompanying drawings. Reference is now made to Fig. 2, which illustrates a signaling flow 200 for QoE measurements according to example embodiments of the present disclosure. For the purpose of discussion, the signaling flow 200 will be described with reference to Fig. 1. Only for the purpose of illustrations, the signaling flow 200 may involve the first device 110-1 and the second device 120. The first device 110-1 comprises a first apparatus 210 which is implemented at the AS layer or at the RRC layer. The first device 110-1 also comprises a second apparatus 220 which is implemented at the application layer. The signaling flow 200 can also involve other core network entities which are not shown in Fig. 1, for example, the MCE 240 and the NM 230.

The NM 230 may generate a QMC activation message. The QMC activation message can indicate a service. The QMC activation message can also comprise a container of a QoE configuration for the service. In some embodiments, the QMC activation message can indicate a QoE reference identity for the QoE configuration. The NM 230 can transmit 2005 the QMC activation message to the second device 120. The QMC activation message may comprise a container of the QoE configuration. The QoE reference identity may be in the QMC message but be placed out of the container of the QoE configuration. The QoE configuration can comprise any metrics which are necessary for assessment of device impact on user experience. For example, the QoE configuration may comprise a threshold for delay of the service. Alternatively, the QoE configuration can comprise a threshold for coverage of the service. In other embodiments, the QoE configuration may also comprise a threshold quality of the service. It should be noted that the QoE configuration can also comprise any proper parameters.

The second device 120 may generate 2010 a RRC configuration based on the received QMC activation message. The second device 120 may generate an ID in RRC layer (referred to as "first identity" hereinafter), and map the QoE reference identity to the first identity. In some embodiments, the first identity can be a RRC identifier. Alternatively, the first identity can be a measurement application layer identifier assigned by RRC layer. In other embodiments, the first identity can be a container identifier.

The second device 120 transmits 2015 the RRC configuration to the first apparatus 210. The RRC configuration comprises the QoE configuration of the service and the first identity. The RRC configuration may also indicate the service type of the service. In some embodiments, the RRC configuration may comprise more than one QoE configuration.

To allow differentiated treatment depending on each customer requirements, 5G supports also Network Slicing concept. With slicing, it is possible for Mobile Network Operators (MNO) to consider customers with each having different service requirements that govern in terms of what slice types each customer is eligible to use based on Service Level Agreement (SLA) and subscriptions. The support of network slicing relies on the principle that traffic for different slices is handled by different PDU sessions. Network can realise the different network slices by scheduling and also by providing different configurations. A service type identified for slicing purposed is characterized by slice identifier: S-NSSAI (Single Network Slice Selection Assistance Information), which consists of Slice/Service Type (SST) and optionally Slice Differentiator (SD). Some exemplary standardised SST values defined for the purpose to establish global interoperability for slicing (so that PLMNs can support the roaming use case more efficiently for the most commonly used Slice/Service Types) are defined as follows:

| **Slice/Service type** | **SST value** | **Characteristics** |
|---|---|---|
| eMBB | 1 | Slice suitable for the handling of 5G enhanced Mobile Broadband. |
| URLLC | 2 | Slice suitable for the handling of ultra- reliable low latency communications. |
| MIoT | 3 | Slice suitable for the handling of massive IoT. |
| V2X | 4 | Slice suitable for the handling of V2X services. |
| HMTC | 5 | Slice suitable for the handling of High-Performance Machine-Type Communications. |

Embodiments of the present disclosure can be applied to the slice. For example, the RRC configuration can comprise the QoE configuration of a slice. In an example embodiment, the RRC configuration may indicate a type of the slice. The slice type can be represented by one of: a slice identifier, slice assistance information or a slice group identifier.

The first apparatus 210 determines 2020 an associated identity (referred to as "second identity" hereinafter) for the QoE configuration based at least in part on the first identity. In some embodiments, the first apparatus 210 may determine the first identity to be the second identity. In other embodiments, the first apparatus 210 may determine the second identity based on the first identity and other identity information. For example, the second identity can be generated based on the first identity and cell identity of the second device 120. In this way, the QoE configuration can be uniquely identified at the first device 110-1. Moreover, it may also reduce the length of the identity.

In some embodiments, the first apparatus 210 may receive a further QoE configuration for the service from a further network device. In this case, the first apparatus 210 may generate a further associated identity for the further QoE configuration.

In addition, the first apparatus 210 may store a mapping between the second identity and the second device 120. For example, the first apparatus 210 may create a record to map the second identity to the second device 120 in a mapping table. As mentioned above, the first apparatus 210 may generate a further associated identity for the further QoE configuration. In this situation, the first apparatus 210 may also store a mapping between the further associated identity and the further network device.

The first apparatus 210 transmits 2025 the QoE configuration with the second identity to the second apparatus 220. For example, the QoE configuration and the second identity may be transmitted in an AT command+CAPPLEVMC. The AT command+CAPPLEVMC may indicate the service type. The AT command+CAPPLEVMC may also comprise the container of the QoE configuration. In this way, the QoE configuration can be distinguished from other QoE configurations associate with the service.

The second apparatus 220 may measure the service based on the QoE configuration. For example, the second apparatus 220 may measure service according to the metrics in the QoE configuration.

In some embodiments, the second apparatus 220 may associate the QoE configuration at the first apparatus 210 with the QoE configuration at the second apparatus 220. For example, the second apparatus 220 may store the mapping between the second identity and an identity of the second apparatus 220 (such as application layer identity).

The second apparatus 220 generates 2030 a QoE report based on the QoE configuration. In some embodiments, the QoE report may be generated periodically. Alternatively, the QoE report can be generated based on any proper triggering conditions. The second apparatus 220 may associate the second identity with the QoE report. In addition, the QoE report may be generated with the association to the application layer identity. In this way, the application layer is able to distinguish different QoE configurations for the same service.

The second apparatus 220 transmits 2035 the QoE report with the second identity to the first apparatus 210. For example, the QoE report and the second identity may be transmitted in an AT command +CAPPLEVMR. The AT command +CAPPLEVMR may indicate the service type. The AT command +CAPPLEVMR may also comprise the container of the QoE report. The container of the QoE report may comprise the QoE measurement results.

In some embodiments, the first apparatus 210 may determine 2040 the device to which the QoE report is forwarded based on the second identity. In some embodiments, the first apparatus 210 can determine the device based on the mapping table mentioned previously. For example, if the QoE report is with the second identity and the second identity is mapped to the first identity, the first apparatus 210 can determine that the QoE is transmitted to the second device 120 based on the first identity. Alternatively, if the QoE report is with the further associated identity and the further associated identity is mapped to the further first identity, the first apparatus 210 can determine that the QoE is transmitted to the further network device based on the further first identity.

The first apparatus 210 may transmit 2045 the QoE report with the first identity to the second device 120. As mentioned above, if the QoE report is with the second identity and the second identity is mapped to the first identity, the first apparatus 210 can transmit the QoE report to the second device 120. In this case, the QoE report can comprise the first identity received from the second device 120.

The second device 120 may identify 2050 the QoE reference identity based on the first identity. For example, the second device 120 may map the first identity to the QoE reference identity. The second device 120 may transmit 2055 the QoE report with the QoE reference identity to the MCE 240. For example, the container of the QoE report which comprises the QoE measurement result can be transmitted to the MCE 240.

The second device 120 may release 2060 the UE context for QoE measurement. The second device 120 may transmit 2065 another RRC message to the first apparatus 210 to release the QoE configuration. In some embodiments, the second device 120 can release multiple application layer measurement configurations in one RRC message at any time. The other RRC message may comprise a release indication. In other embodiments, the other RRC message may indicate the service type. The other RRC message may also comprise the first identity. Alternatively or in addition, the other RRC message can comprise the container of the QoE configuration.

The first apparatus 210 may also determine the second identity for the QoE configuration based at least in part on the first identity indicated in the other RRC message. For example, if the first apparatus 210 has store the mapping between the first identity and the second identity, the first apparatus 210 may find or derive the second identity based on the first identity and the stored mapping. In some embodiments, the first apparatus 210 may determine the second identity to be the first identity. In other embodiments, the first apparatus 210 may determine the second identity based on the first identity and other identity information. For example, the other identity information can be cell identity of the second device 120. In this way, the QoE configuration can be uniquely identified at the first device 110-1.

The first apparatus 210 may transmit 2070 the QoE configuration with the second identity and the release indication to the second apparatus 220. For example, the QoE configuration, the second identity and the release indication may be transmitted in an AT command+CAPPLEVMC. The AT command+CAPPLEVMC may indicate the service type. The AT command+CAPPLEVMC may also comprise the container of the QoE configuration. The second apparatus 220 may end 2075 the QoE measurement with the second identity.

According to the above embodiments, it enables unique tracking and identification of QoE measurements configuration and reporting across different layers of UE or network entities with possibility to handle multiple QoE configurations of same service type with different purposes and use cases (e.g. different analytics requirement). With this implementation global unique QoE Reference ID could link QMC configuration and report at network side, while global unique associated ID is used to coordinate QMC configuration and report at UE side, finally complete end to end QMC procedure without mismatch.

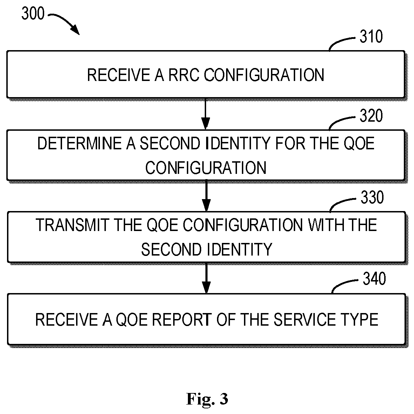

Fig. 3 shows a flowchart of method 300 in accordance with embodiments of the present disclosure. For the purpose of discussion, the method 300 will be described from the perspective of the first device. Only for the purpose of illustrations, the method 300 is described with the reference to the first apparatus 210 implemented at the first device 110-1.

At block 310, the first apparatus 210 receives the RRC configuration from the second device 120. The RRC configuration comprises the QoE configuration of the service and the first identity. The RRC configuration may also indicate the service type. In some embodiments, the RRC configuration may comprise more than one QoE configuration.

At block 320, the first apparatus 210 determines a second identity for the QoE configuration based at least in part on the first identity. In some embodiments, the first apparatus 210 may determine the first identity to be the second identity. In other embodiments, the first apparatus 210 may determine the second identity based on the first identity and other identity information. For example, the second identity can be generated based on the first identity and cell identity of the second device 120. In this way, the QoE configuration can be uniquely identified at the first device 110-1.

In some embodiments, the first apparatus 210 may receive a further QoE configuration for the service from a further network device. In this case, the first apparatus 210 may generate a further associated identity for the further QoE configuration.

In addition, the first apparatus 210 may store a mapping between the second identity and the second device 120. For example, the first apparatus 210 may create a record to map the second identity to the second device 120 in a mapping table. As mentioned above, the first apparatus 210 may generate a further associated identity for the further QoE configuration. In this situation, the first apparatus 210 may also store a mapping between the further associated identity and the further network device.

At block 330, the first apparatus 210 transmits the QoE configuration with the second identity to the second apparatus 220. For example, the QoE configuration and the second identity may be transmitted in an AT command+CAPPLEVMC. The AT command+CAPPLEVMC may indicate the service type. The AT command+CAPPLEVMC may also comprise the container of the QoE configuration.

At block 340, the first apparatus 210 receives the QoE report with the second identity from the second apparatus 220. For example, the QoE report and the second identity may be received in an AT command +CAPPLEVMR. The AT command +CAPPLEVMR may indicate the service type. The AT command +CAPPLEVMR may also comprise the container of the QoE report. The container of the QoE report may comprise the QoE measurement results.

In some embodiments, the first apparatus 210 determines the device to which the QoE report is forwarded based on the second identity. In some embodiments, the first apparatus 210 can determine the device based on the mapping table mentioned previously. For example, if the QoE report is with the second identity and the second identity is mapped to the first identity, the first apparatus 210 can determine that the QoE is transmitted to the second device 120 based on the first identity. Alternatively, if the QoE report is with the further associated identity and the further associated identity is mapped to the further first identity, the first apparatus 210 can determine that the QoE is transmitted to the further network device based on the further first identity.

The first apparatus 210 transmits the QoE report with the first identity to the second device 120. As mentioned above, if the QoE report is with the second identity and the second identity is mapped to the first identity, the first apparatus 210 can transmit the QoE report to the second device 120. In this case, the QoE report can comprise the first identity received from the second device 120.

In some embodiments, the first apparatus 210 may receive another RRC message from the second device 120 to release the QoE configuration. The other RRC message may comprise a release indication. In other embodiments, the other RRC message may indicate the service type. The other RRC configuration may also message the first identity. Alternatively or in addition, the other RRC message can comprise the container of the QoE configuration.

The first apparatus 210 may also determine the second identity for the QoE configuration based at least in part on the first identity indicated in the other RRC message. For example, if the first apparatus 210 has store the mapping between the first identity and the second identity, the first apparatus 210 may find or derive the second identity based on the first identity and the stored mapping. In some embodiments, the first apparatus 210 may determine the second identity to be the first identity. In other embodiments, the first apparatus 210 may determine the second identity based on the first identity and other identity information. For example, the other identity information can be cell identity of the second device 120. In this way, the QoE configuration can be uniquely identified at the first device 110-1.

Alternatively or in addition, the first apparatus 210 may transmit the QoE configuration with the second identity and the release indication to the second apparatus 220. For example, the QoE configuration, the second identity and the release indication may be transmitted in an AT command+CAPPLEVMC. The AT command+CAPPLEVMC may indicate the service type. The AT command+CAPPLEVMC may also comprise the container of the QoE configuration.

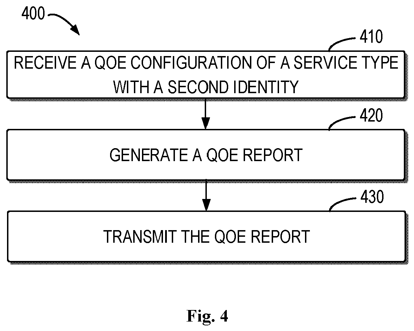

Fig. 4 shows a flowchart of an example method 400 in accordance with some example embodiments of the present disclosure. For the purpose of discussion, the method 400 will be described from the perspective of the first device. Only for the purpose of illustrations, the method 400 is described with the reference to the second apparatus 220 implemented at the first device 110-1.

At block 410, the second apparatus 220 receives the QoE configuration with the second identity from the first apparatus 210. For example, the QoE configuration and the second identity may be received in an AT command+CAPPLEVMC. The AT command+CAPPLEVMC may indicate the service type. The AT command+CAPPLEVMC may also comprise the container of the QoE configuration.

The second apparatus 220 may measure the service based on the QoE configuration. For example, the second apparatus 220 may measure service according to the metrics in the QoE configuration.

In some embodiments, the second apparatus 220 may associate the QoE configuration at the first apparatus 210 with the QoE configuration at the second apparatus 220. For example, the second apparatus 220 may store the mapping between the second identity and an identity of the second apparatus 220 (such as application layer identity).

At block 420, the second apparatus 220 generates a QoE report based on the QoE configuration. In some embodiments, the QoE report may be generated periodically. Alternatively, the QoE report can be generated based on any proper triggering conditions. The second apparatus 220 may associate the second identity with the QoE report. In addition, the QoE report may be generated with the association to the application layer identity. In this way, the application layer is able to distinguish different QoE configurations for the same service.

At block 430, the second apparatus 220 transmits the QoE report with the second identity to the first apparatus 210. For example, the QoE report and the second identity may be transmitted in an AT command +CAPPLEVMR. The AT command +CAPPLEVMR may indicate the service type. The AT command +CAPPLEVMR may also comprise the container of the QoE report. The container of the QoE report may comprise the QoE measurement results.

The second apparatus 220 may receive the QoE configuration with the second identity and a release indication from the first apparatus 210. For example, the QoE configuration, the second identity and the release indication may be transmitted in an AT command+CAPPLEVMC. The AT command+CAPPLEVMC may indicate the service type. The AT command+CAPPLEVMC may also comprise the container of the QoE configuration. The second apparatus 220 may end the QoE measurement with the second identity.

In some example embodiments, an apparatus capable of performing the method 300 (for example, the first device 110) may comprise means for performing the respective operations of the method 300. The means may be implemented in any suitable form. For example, the means may be implemented in a circuitry or software module. The apparatus may be implemented as or included in the first device 110. In some example embodiments, the means may comprise at least one processor and at least one memory including computer program code. The at least one memory and computer program code are configured to, with the at least one processor, cause performance of the apparatus.

In some example embodiments, the apparatus comprises mean for receiving, from a device, a radio resource control (RRC) configuration indicating: a first identity and a quality of experience (QoE) configuration of a service; means for determining a second identity for the QoE configuration based at least in part on the first identity; means for transmitting, to a second apparatus, the QoE configuration with the second identity; and means for receiving, from the second apparatus, a QoE report of the service with the second identity.

In some example embodiments, the means for determining the second identity for the QoE configuration comprises: means for determining the first identity to be the second identity.

In some example embodiments, the means for determining the second identity for the QoE configuration comprises: means for determining the associate identity based on the first identity and other identity information.

In some example embodiments, the apparatus comprises mean for storing a mapping between the second identity and the device.

In some example embodiments, the apparatus comprises mean for determining the device to which the QoE report is forwarded based on the second identity; and means for transmitting the QoE report with the first identity to the device.

In some example embodiments, an apparatus capable of performing the method 400 (for example, the first device 110) may comprise means for performing the respective operations of the method 400. The means may be implemented in any suitable form. For example, the means may be implemented in a circuitry or software module. The apparatus may be implemented as or included in the first device 110. In some example embodiments, the means may comprise at least one processor and at least one memory including computer program code. The at least one memory and computer program code are configured to, with the at least one processor, cause performance of the apparatus.

In some example embodiments, the apparatus comprises mean for receiving, from a first apparatus, a quality of experience (QoE) configuration of a service with a second identity; means for generating a QoE report of the service based on the QoE configuration; and means for transmitting, to the first apparatus, the QoE report with the second identity.

In some example embodiments, the apparatus comprises mean for associating the second identity and an identity of the second apparatus; and means for storing a mapping between the second identity and the identity of the second apparatus.

In some example embodiments, the second identity is a radio resource control (RRC) identity, or the second identity is generated based on the first identity and other identity information.

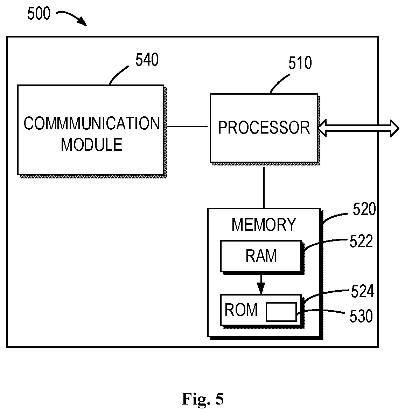

Fig. 5 is a simplified block diagram of a device 500 that is suitable for implementing example embodiments of the present disclosure. The device 500 may be provided to implement a communication device, for example, the first device as shown in Fig. 1. As shown, the device 500 includes one or more processors 510, one or more memories 520 coupled to the processor 510, and one or more communication modules 540 coupled to the processor 510.

The communication module 540 is for bidirectional communications. The communication module 540 has one or more communication interfaces to facilitate communication with one or more other modules or devices. The communication interfaces may represent any interface that is necessary for communication with other network elements. In some example embodiments, the communication module 540 may include at least one antenna.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 522 and other volatile memories that will not latest in the power-down duration.

A computer program 530 includes computer executable instructions that are executed by the associated processor 510. The program 530 may be stored in the memory, e.g., ROM 524. The processor 510 may perform any suitable actions and processing by loading the program 530 into the RAM 522.

Example embodiments of the present disclosure may be implemented by means of the program 530 so that the device 500 may perform any process of the disclosure as discussed with reference to Figs. 2 to 4. The example embodiments of the present disclosure may also be implemented by hardware or by a combination of software and hardware.

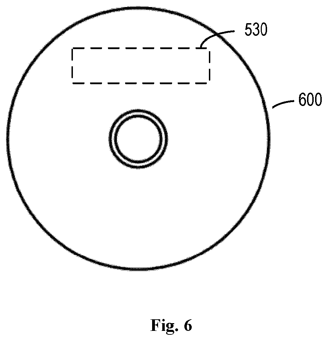

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. The computer readable medium may include any types of tangible non-volatile storage, such as ROM, EPROM, a flash memory, a hard disk, CD, DVD, and other magnetic storage and/or optical storage. Fig. 6 shows an example of the computer readable medium 600 in form of an optical storage disk. The computer readable medium has the program 530 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target physical or virtual processor, to carry out any of the methods as described above with reference to Figs. 2 to 4. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

## Claims

1. A method, comprising:
receiving (310), at a first apparatus (210) from a network device (120), a radio resource control, RRC, configuration indicating: a first identity generated by the network device (120) in RRC layer and a quality of experience, QoE, configuration of a service,
wherein the first apparatus (210) is implemented at an access stratum, AS, layer or at the RRC layer of a terminal device, and ;
determining (320), by the first apparatus (210), a second identity for the QoE configuration based at least in part on the first identity indicated in the RRC configuration;
transmitting (330), by the first apparatus (210) and to a second apparatus (220), the QoE configuration with the second identity,
wherein the second apparatus (220) is implemented at an application layer of the terminal device;
receiving (340), by the first apparatus (210) and from the second apparatus (220), a QoE report of the service with the second identity;
determining, by the first apparatus (210), the network device (120) to which the QoE report is forwarded based on the second identity; and
transmitting, by the first apparatus (210), the QoE report with the first identity to the network device (120).

2. The method of claim 1, wherein determining the second identity for the QoE configuration comprises:
determining the second identity to be the first identity.

3. The method of claim 1, wherein determining the second identity for the QoE configuration comprises:
determining the second identity based on the first identity and other identity information.

4. The method of claim 1, further comprising:
storing, by the first apparatus (210), a mapping between the second identity and the network device (120).

5. The method of claim 1, wherein the first identity comprises one of:
a RRC identifier,
a measurement application layer identifier associated by the RRC layer, or
a container identifier.

6. A first apparatus (210) implemented at an access stratum, AS, layer or at the RRC layer of a terminal device, the first apparatus (210) comprising:
means for receiving, by the first apparatus (210) and from a network device (120), a radio resource control, RRC, configuration indicating: a first identity generated by the network device (120) in RRC layer and a quality of experience, QoE, configuration of a service;
means for determining, by the first apparatus (210), a second identity for the QoE configuration based at least in part on the first identity indicated in the RRC configuration;
means for transmitting, by the first apparatus (210) and to a second apparatus (220), the QoE configuration with the second identity;
means for receiving, by the first apparatus (210) and from the second apparatus (220), a QoE report of the service with the second identity;
means for determining, by the first apparatus (210), the network device (120) to which the QoE report is forwarded based on the second identity; and
means for transmitting, by the first apparatus (210), the QoE report with the first identity to the network device (120).

7. The first apparatus (220) of claim 6, further comprising:
means for performing the method of any of claims 2 to 5, respectively.

8. A non-transitory computer readable medium comprising program instructions which, when executed by an apparatus, cause the apparatus to perform at least the method of any of claims 1-5.

## Patentansprüche

1. Verfahren, umfassend:
Empfangen (310), an einer ersten Vorrichtung (210) von einer Netzwerkvorrichtung (120), einer Funkressourcensteuerungs-, RRC-, Konfiguration, indizierend: eine erste Identität, erzeugt von der Netzwerkvorrichtung (120) in einer RRC-Schicht, und eine Quality-of-Experience-, QoE-, Konfiguration eines Dienstes,
wobei die erste Vorrichtung (210) in einer Zugriffsstratum-, AS-, Schicht oder in der RRC-Schicht eines Endgeräts implementiert ist, und ;
Bestimmen (320), durch die erste Vorrichtung (210), einer zweiten Identität für die QoE-Konfiguration zumindest teilweise basierend auf der ersten Identität, die in der RRC-Konfiguration indiziert ist;
Übertragen (330), durch die erste Vorrichtung (210) und an eine zweite Vorrichtung (220), der QoE-Konfiguration mit der zweiten Identität,
wobei die zweite Vorrichtung (220) in einer Anwendungsschicht des Endgeräts implementiert ist;
Empfangen (340), durch die erste Vorrichtung (210) und von der zweiten Vorrichtung (220), eines QoE-Berichts des Dienstes mit der zweiten Identität;
Bestimmen, durch die erste Vorrichtung (210), der Netzwerkvorrichtung (120), an die der QoE-Bericht basierend auf der zweiten Identität weitergeleitet wird; und
Übertragen, durch die erste Vorrichtung (210), des QoE-Berichts mit der ersten Identität an die Netzwerkvorrichtung (120).

2. Verfahren nach Anspruch 1, wobei das Bestimmen der zweiten Identität für die QoE-Konfiguration umfasst:
Bestimmen, dass die zweite Identität die erste Identität ist.

3. Verfahren nach Anspruch 1, wobei das Bestimmen der zweiten Identität für die QoE-Konfiguration umfasst:
Bestimmen der zweiten Identität basierend auf der ersten Identität und anderer Identitätsinformationen.

4. Verfahren nach Anspruch 1, ferner umfassend:
Speichern, durch die erste Vorrichtung (210), eines Mappings zwischen der zweiten Identität und der Netzwerkvorrichtung (120).

5. Verfahren nach Anspruch 1, wobei die erste Identität eines der Folgenden umfasst:
eine RRC-Kennung,
eine von der RRC-Schicht zugeordnete Messanwendungsschicht-Kennung, oder
eine Containerkennung.

6. Erste Vorrichtung (210), implementiert in einer Zugriffsstratum-, AS-, Schicht oder in der RRC-Schicht eines Endgeräts, wobei die erste Vorrichtung (210) umfasst:
Mittel zum Empfangen, durch die erste Vorrichtung (210) und von einer Netzwerkvorrichtung (120), einer Funkressourcensteuerungs-, RRC-, Konfiguration, indizierend: eine erste Identität, die von der Netzwerkvorrichtung (120) in der RRC-Schicht erzeugt wird, und eine Quality-of-Experience-, QoE-, Konfiguration eines Dienstes;
Mittel zum Bestimmen, durch die erste Vorrichtung (210), einer zweiten Identität für die QoE-Konfiguration zumindest teilweise basierend auf der ersten Identität, die in der RRC-Konfiguration indiziert ist;
Mittel zum Übertragen, durch die erste Vorrichtung (210) und an eine zweite Vorrichtung (220), der QoE-Konfiguration mit der zweiten Identität;
Mittel zum Empfangen, durch die erste Vorrichtung (210) und von der zweiten Vorrichtung (220), eines QoE-Berichts des Dienstes mit der zweiten Identität;
Mittel zum Bestimmen, durch die erste Vorrichtung (210), der Netzwerkvorrichtung (120), an die der QoE-Bericht basierend auf der zweiten Identität weitergeleitet wird; und
Mittel zum Übertragen, durch die erste Vorrichtung (210), des QoE-Berichts mit der ersten Identität an die Netzwerkvorrichtung (120).

7. Erste Vorrichtung (220) nach Anspruch 6, ferner umfassend:
Mittel zur Durchführung jeweils des Verfahrens nach einem der Ansprüche 2 bis 5.

8. Nicht-transitorisches computerlesbares Medium, umfassend Programmanweisungen, die, wenn sie von einer Vorrichtung ausgeführt werden, die Vorrichtung veranlassen, zumindest das Verfahren nach einem der Ansprüche 1 bis 5 durchzuführen.

## Revendications

1. Un procédé, comprenant :
la réception (310), au niveau d'un premier appareil (210) en provenance d'un dispositif réseau (120), d'une configuration de contrôle des ressources radio, RRC, indiquant : une première identité générée par le dispositif réseau (120) dans la couche RRC et une configuration de qualité d'expérience, QoE, d'un service,
dans laquelle le premier appareil (210) est mis en œuvre au niveau d'une couche de stratum d'accès, AS, ou au niveau de la couche RRC d'un dispositif terminal, et ;
la détermination (320), par le premier appareil (210), d'une deuxième identité pour la configuration QoE sur la base, au moins en partie, de la première identité indiquée dans la configuration RRC ;
la transmission (330), par le premier appareil (210) et vers un deuxième appareil (220), de la configuration QoE avec la deuxième identité,
dans laquelle le deuxième appareil (220) est mis en œuvre au niveau d'une couche applicative du dispositif terminal ;
la réception (340), par le premier appareil (210) et en provenance du deuxième appareil (220), d'un rapport QoE du service avec la deuxième identité ;
la détermination, par le premier appareil (210), du dispositif réseau (120) vers lequel le rapport QoE est transmis sur la base de la deuxième identité ; et
la transmission, par le premier appareil (210), du rapport QoE avec la première identité vers le dispositif réseau (120).

2. Le procédé selon la revendication 1, dans lequel la détermination de la deuxième identité pour la configuration QoE comprend :
la détermination que la deuxième identité est la première identité.

3. Le procédé selon la revendication 1, dans lequel la détermination de la deuxième identité pour la configuration QoE comprend :
la détermination de la deuxième identité sur la base de la première identité et d'autres informations d'identité.

4. Le procédé selon la revendication 1, comprenant en outre :
le stockage, par le premier appareil (210), d'une correspondance entre la deuxième identité et le dispositif réseau (120).

5. Le procédé selon la revendication 1, dans lequel la première identité comprend l'un des éléments suivants :
un identifiant RRC,
un identifiant de couche applicative de mesure associé par la couche RRC, ou
un identifiant de conteneur.

6. Un premier appareil (210) mis en œuvre au niveau d'une couche de stratum d'accès, AS, ou au niveau de la couche RRC d'un dispositif terminal, le premier appareil (210) comprenant :
des moyens pour recevoir, par le premier appareil (210) et en provenance d'un dispositif réseau (120), une configuration de contrôle des ressources radio, RRC, indiquant : une première identité générée par le dispositif réseau (120) dans la couche RRC et une configuration de qualité d'expérience, QoE, d'un service ;
des moyens pour déterminer, par le premier appareil (210), une deuxième identité pour la configuration QoE sur la base, au moins en partie, de la première identité indiquée dans la configuration RRC ;
des moyens pour transmettre, par le premier appareil (210) et vers un deuxième appareil (220), la configuration QoE avec la deuxième identité ;
des moyens pour recevoir, par le premier appareil (210) et en provenance du deuxième appareil (220), un rapport QoE du service avec la deuxième identité ;
des moyens pour déterminer, par le premier appareil (210), le dispositif réseau (120) vers lequel le rapport QoE est transmis sur la base de la deuxième identité ; et
des moyens pour transmettre, par le premier appareil (210), le rapport QoE avec la première identité vers le dispositif réseau (120).

7. Le premier appareil (220) selon la revendication 6, comprenant en outre :
des moyens pour mettre en œuvre le procédé selon l'une quelconque des revendications 2 à 5, respectivement.

8. Un support lisible par ordinateur non transitoire comprenant des instructions de programme qui, lorsqu'elles sont exécutées par un appareil, amènent l'appareil à mettre en œuvre au moins le procédé selon l'une quelconque des revendications 1 à 5.
